# EUROPEAN PATENT APPLICATION

(11) **EP 4 297 497 A1**
(43) Date of publication of application: **27.12.2023**
(21) Application number: 22180028.7
(22) Date of filing: 21.06.2022
(51) Int. Cl.: H04W 52/36, H04B 7/06, H04W 52/42

(54) **USER EQUIPMENT COMPRISING MULTIPLE ANTENNAS AND CORRESPONDING METHOD AND COMPUTER PROGRAM**

(71) Applicant: Nokia Technologies Oy, 02610 Espoo (FI)
(72) Inventor: ROM, Christian, Aalborg (DK); CAPORAL DEL BARRIO, Samantha, Aalborg (DK); SVENDSEN, Simon, Aalborg (DK); VEJLGAARD, Benny, Gistrup (DK); KNUDSEN, Knud, Aabybro (DK); KARIMIDEHKORDI, Ali, München (DE)
(74) Representative: Nokia EPO representatives

(57) **Abstract**

User equipment (UE) comprising means for: reporting at least one candidate CSI beam index to a network to avoid and/or mitigate a maximum permissible exposure (MPE) event; wherein the user equipment associates at least one candidate antenna of the user equipment to the at least one candidate CSI beam index.

## Description

### TECHNOLOGICAL FIELD

Embodiments of the present disclosure relate to user equipment comprising multiple antennas. In some examples, the disclosure relates to avoiding and/or mitigating a maximum permissible exposure (MPE) event where the user equipment comprises multiple antennas. In some examples, the disclosure relates to controlling the selection of an alternative antenna, which in some but not necessarily all examples, can help avoid and/or mitigate a maximum permissible exposure (MPE) event.

### BACKGROUND

A terminal access node (user equipment) in a radio telecommunications network is configured to communicate reliably with one or more network access nodes using transmission/reception of radio waves.

A terminal access node can use an antenna to transmit/receive radio waves. An antenna can be a single antenna element or an array of antenna elements, an antenna panel in NxM arrangement e.g. 1x1, 1x4, 2x2 etc. The terminal access node accesses the antenna via an antenna port and the term 'antenna' from the operational perspective of the terminal access node can be replaced with 'antenna port' without adding subject matter. Using an array of antenna elements enables beam-forming which increases gain. This can be particularly important at higher frequencies (e.g., 3GPP Frequency Range 2 -FR2 which is above 24.25 GHz). The array of antennas creates a spatial filter.

The Maximum Permissible Exposure (MPE) is a maximum permissible exposure of a user of user equipment to radio waves transmitted by the user equipment. A Maximum Permissible Exposure (MPE) event is an event that relates to maximum permissible exposure of a user of the user equipment to radio waves transmitted by the user equipment. It can, for example, relate to current exposure and/or accumulated exposure and/or change in exposure. The user equipment can respond to a MPE event by performing Power Back-Off (PBO) which reduces the transmit power of radio waves transmitted by the user equipment. This reduces the power received by the network access node and consequently the signal to interference and noise ratio (SINR) as well.

A UE might have to reduce its output power if the user gets in close vicinity of the transmitting antenna and this sudden power back-off may be about 6 dB or even higher for larger arrays.

Managing a MPE event is straightforward when there is a single antenna as there is only one serving antenna and as a consequence the only available option is PBO. However, managing a MPE event when the user equipment has multiple, differently located, antennas is more complex. For example, no PBO or less PBO may be available if the serving antenna is changed.

Irrespective of whether or not there is a MPE event, a close presence of a user's body may act as a block and degrade the wireless channel.

It would be desirable to avoid and/or mitigate a maximum permissible exposure (MPE) event where user equipment comprises multiple antennas.

It would be desirable to control selection of an alternative antenna, which in some but not necessarily all examples, can help avoid and/or mitigate a maximum permissible exposure (MPE) event.

### BRIEF SUMMARY

According to various, but not necessarily all, embodiments there is provided user equipment (UE) comprising means for:
reporting at least one candidate CSI beam index to a network to avoid and/or
mitigate a maximum permissible exposure (MPE) event;
wherein
the user equipment associates at least one candidate antenna of the user equipment to the at least one candidate CSI beam index.

In some but not necessarily all examples, the apparatus comprises: means for reporting at least one candidate CSI beam index to the network in a Power Headroom Report.

In some but not necessarily all examples, the apparatus comprises: means for reporting, to the network, allowed reduction of maximum power level for the at least one candidate CSI beam index.

In some but not necessarily all examples, the apparatus comprises: means for reporting multiple non-serving candidate CSI beam indexes to the network to avoid and/or mitigate a maximum permissible exposure (MPE) event.

In some but not necessarily all examples, the user equipment associates at least one non-serving antenna of the user equipment to the multiple non-serving candidate CSI beam indexes and/or the user equipment associates multiple non-serving antennas of the user equipment to the multiple non-serving candidate CSI beam indexes.

In some but not necessarily all examples, the MPE event that is avoided and/or mitigated by reporting the at least one candidate CSI beam index to the network is associated with a serving antenna different to the at least one candidate antenna of the user equipment associated to the at least one candidate CSI beam index and wherein the at least one candidate antenna of the user equipment does not have a MPE event or has a less severe MPE event than the MPE event at the serving antenna.

In some but not necessarily all examples, the apparatus comprises: means for using at least one serving antenna to communicate via a beam associated with at least one serving CSI beam index, wherein the at least one serving antenna is different to the at least one candidate antenna and wherein the at least one serving CSI beam index, associated with the serving antenna, is different to the reporting the at least one candidate CSI beam index associated with the at least one candidate antenna; means for associating a candidate antenna and a candidate CSI beam index in response to the combination of candidate antenna and associated candidate CSI beam index being usable and having a lower power backoff requirement than the combination of the serving antenna and the associated serving CSI beam index.

In some but not necessarily all examples, the apparatus comprises: means for switching to using a non-serving antenna of the user equipment associated with a candidate CSI beam index that is, has been, or will be reported.

In some but not necessarily all examples, the apparatus comprises: means for:
creating a first mapping of antennas to downlink path delay intervals using a wider beam downlink reference signal;
creating a second mapping of downlink path delay intervals to downlink spatial filters, optionally downlink angles of departure, using different narrower beam reference signals identified using CSI beam indexes; and
controlling association of the at least one non-serving antenna and at least one candidate CSI beam index based on the first mapping and the second mapping.

In some but not necessarily all examples, the apparatus comprises: means configured to: control the selection of an antenna based on the first mapping and the second mapping.

In some but not necessarily all examples, creating the first mapping comprises: performing a power delay profile estimation for each antenna using the wider beam downlink reference signal;
for each antenna, grouping peak delays in the power delay profile for the antenna as downlink path delay intervals for that antenna to provide the first mapping of antennas to downlink path delay intervals.
and/or
creating the second mapping comprises:
   performing a power delay profile estimation for different downlink spatial filters using an antenna to receive a sweep of narrower beam reference signals that have at least the different downlink spatial filters;
   for each of the different downlink spatial filters, group peaks delays in the power delay profile for a downlink angle of departure with downlink path delay intervals for that downlink angle of departure to provide the second mapping of downlink path delay intervals to downlink spatial filters, optionally the downlink spatial filters being downlink angles of departure.
   In some but not necessarily all examples, the wider beam downlink reference signal is a Synchronization Signal Block (SSB) signal or a Channel State Information Reference Signal (CSI-RS) and the user equipment is
configured to inform the network in dependence upon:
   better quality being available on the selected antenna compared to the current in-use antenna when using a different angle of departure to the current in-use angle of departure and/or
   better quality is available on the selected antenna compared to the current in-use antenna when using a same angle of departure to the current in-use angle of departure.

According to various, but not necessarily all, embodiments there is provided a method comprising:
reporting at least one candidate CSI beam index to a network to avoid and/or
mitigate a maximum permissible exposure (MPE) event at a user equipment; and
at the user equipment, associating at least one candidate antenna of the user equipment to the at least one candidate CSI beam index.

According to various, but not necessarily all, embodiments there is provided a computer program that when run by one or more processors of user equipment causes:
reporting at least one candidate CSI beam index to a network to avoid and/or
mitigate a maximum permissible exposure (MPE) event at the user equipment; and
associating at least one candidate antenna of the user equipment to the at least one candidate CSI beam index.

According to various, but not necessarily all, embodiments there is provided an apparatus comprising:
at least one processor; and
at least one memory including computer program code;
the at least one memory and the computer program code configured to, with the at least one processor, cause the apparatus at least to perform:
   reporting at least one candidate CSI beam index to a network to avoid and/or
   mitigate a maximum permissible exposure (MPE) event at a user equipment; and
   at the user equipment, associating at least one candidate antenna of the user equipment to the at least one candidate CSI beam index.

According to various, but not necessarily all, embodiments there is provided an apparatus comprising means for:
creating a first mapping of antennas to downlink path delay intervals using a wider beam downlink reference signal;
creating a second mapping of downlink path delay intervals to downlink spatial filters using different narrower beam reference signals; and
controlling the selection of an antenna based on the first mapping and the second mapping.

In some but not necessarily all examples, the apparatus comprises: means configured to: create a third mapping of antennas to downlink spatial filters by combining the first mapping and the second mapping and control the selection of an antenna based on the third mapping.

In some but not necessarily all examples, a downlink path delay interval is associated with a cluster that is a group of rays that share a common angle of departure and a common angle of arrival.

In some but not necessarily all examples, the wider beam downlink reference signal is a Synchronization Signal Block (SSB) signal or a Channel State Information Reference Signal (CSI-RS).

In some but not necessarily all examples, creating the first mapping comprises: performing a power delay profile estimation for each antenna using the wider beam downlink reference signal;
for each antenna, grouping peak delays in the power delay profile for the antenna as downlink path delay intervals for that antenna to provide the first mapping of antennas to downlink path delay intervals.

In some but not necessarily all examples, creating the second mapping comprises: performing a power delay profile estimation for different downlink spatial filters using an antenna to receive a sweep of narrower beam reference signals that have at least the different downlink spatial filters;
for each of the different downlink spatial filters, group peaks delays in the power delay profile for a downlink angle of departure with downlink path delay intervals for that downlink angle of departure to provide the second mapping of downlink path delay intervals to downlink spatial filters.

The apparatus can be but is not necessarily user equipment. In some but not necessarily all examples, the apparatus is configured as user equipment and comprises means configured to inform a network before switching to use the selected antenna and/or means configured to inform a network after switching to use the selected antenna.

In some but not necessarily all examples, the apparatus is configured to inform the network to mitigate a maximum permissible exposure event.

In some but not necessarily all examples, the apparatus is configured to report a narrower beam reference signal
to the network.

In some but not necessarily all examples, the apparatus is configured to report the narrower beam reference signal
to the network in a maximum permissible exposure event (MPE) event message informing the network of power back-off at the UE.

In some but not necessarily all examples, the apparatus is configured to inform the network when better quality is available on the selected antenna compared to the current in-use antenna when using a different angle of departure to the current in-use angle of departure.

In some but not necessarily all examples, the apparatus is configured to switch to use the selected antenna when better quality is available on the selected antenna compared to the current in-use antenna when using a same angle of departure to the current in-use angle of departure.

In some but not necessarily all examples, better quality is assessed using downlink quality measurements and availability are assessed using power headroom available for the antenna.

According to various, but not necessarily all, embodiments there is provided a method comprising:
creating a first mapping of antennas to downlink path delay intervals using a wider beam downlink reference signal;
creating a second mapping of downlink path delay intervals to downlink spatial filters using different narrower beam reference signals;
controlling the selection of an antenna based on the first mapping and the second mapping.

According to various, but not necessarily all, embodiments there is provided a computer program that when run by one or more processors enables:
creating a first mapping of antennas to downlink path delay intervals using a wider beam downlink reference signal;
creating a second mapping of downlink path delay intervals to downlink spatial filters using different narrower beam reference signals; and
controlling the selection of an antenna based on the first mapping and the second mapping.

According to various, but not necessarily all, embodiments there is provided an apparatus comprising:
at least one processor; and
at least one memory including computer program code;
the at least one memory and the computer program code configured to, with the at least one processor, cause the apparatus at least to perform:
   creating a first mapping of antennas to downlink path delay intervals using a wider beam downlink reference signal;
   creating a second mapping of downlink path delay intervals to downlink spatial filters using different narrower beam reference signals; and
   controlling the selection of an antenna based on the first mapping and the second mapping

According to various, but not necessarily all, embodiments there is provided an apparatus comprising means for:
creating a first mapping of antennas to network reference signals from receiving downlink path delay intervals using a wider beam;
creating a second mapping of downlink path delay intervals from network reference signals to downlink spatial filters using different narrower beams to transmit the reference signals; and
controlling the reporting of the at least one candidate CSI beam index based on the selection of an antenna based on the first mapping and the second mapping.

According to various, but not necessarily all, embodiments there is provided examples as claimed in the appended claims.

### BRIEF DESCRIPTION

Some examples will now be described with reference to the accompanying drawings in which:
FIG. 1 shows an example of the subject matter described herein;
FIG. 2A shows another example of the subject matter described herein;
FIG. 2B shows another example of the subject matter described herein;
FIG. 3A shows another example of the subject matter described herein;
FIG. 3B shows another example of the subject matter described herein;
FIG. 4A shows another example of the subject matter described herein;
FIG. 4B shows another example of the subject matter described herein;
FIG. 5 shows another example of the subject matter described herein;
FIG. 6 shows another example of the subject matter described herein;
FIG. 7 shows another example of the subject matter described herein;
FIG. 8 shows another example of the subject matter described herein;
FIG. 9A shows another example of the subject matter described herein;
FIG. 9B shows another example of the subject matter described herein;
FIG. 10A shows another example of the subject matter described herein;
FIG. 10B shows another example of the subject matter described herein;
FIG. 11 shows another example of the subject matter described herein;
FIG. 12A shows another example of the subject matter described herein;
FIG. 12B shows another example of the subject matter described herein;
FIG. 12C shows another example of the subject matter described herein;
FIG. 13 shows another example of the subject matter described herein;
FIG. 14A shows another example of the subject matter described herein;
FIG. 14B shows another example of the subject matter described herein;
FIG. 15 shows another example of the subject matter described herein;
FIG. 16 shows another example of the subject matter described herein;
FIG. 17 shows another example of the subject matter described herein;
FIG. 18 shows another example of the subject matter described herein.

### DETAILED DESCRIPTION

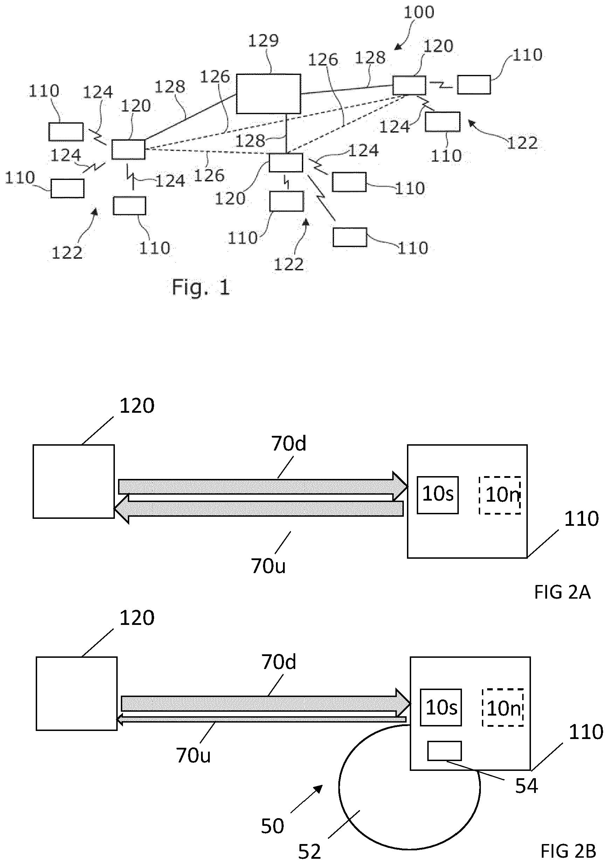

FIG 1 illustrates an example of a network 100 comprising a plurality of network nodes including terminal nodes 110, access nodes 120 and one or more core nodes 129. The terminal nodes 110 and access nodes 120 communicate with each other. The one or more core nodes 129 communicate with the access nodes 120.

The network 100 is in this example is a radio telecommunications network, in which at least some of the terminal nodes 110 and access nodes 120 communicate with each other using transmission/reception of radio waves.

The one or more core nodes 129 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

The access node 120 is a cellular radio transceiver, for example a transmission/reception point (TRP). The terminal nodes 110 are cellular radio transceivers.

In the example illustrated the cellular network 100 is a third generation Partnership Project (3GPP) network in which the terminal nodes 110 are user equipment (UE) and the access nodes 120 are transmission/reception point (TRP), for example base stations.

In the particular example illustrated the network 100 is an Evolved Universal Terrestrial Radio Access network (E-UTRAN). The E-UTRAN consists of E-UTRAN NodeBs (eNBs) 120, providing the E-UTRA user plane and control plane (RRC) protocol terminations towards the UE 110. The eNBs 120 are interconnected with each other by means of an X2 interface 126. The eNBs are also connected by means of the S1 interface 128 to the Mobility Management Entity (MME) 129.

In other examples the network 100 is a Next Generation (or New Radio, NR) Radio Access network (NG-RAN). The NG-RAN consists of gNodeBs (gNBs) 120, providing the user plane and control plane (RRC) protocol terminations towards the UE 110. The gNBs 120 are interconnected with each other by means of an X2/Xn interface 126. The gNBs are also connected by means of the N2 interface 128 to the Access and Mobility management Function (AMF).

A user equipment 110 comprises a mobile equipment. Where reference is made to user equipment that reference includes and encompasses, wherever possible, a reference to mobile equipment.

In 3GPP, the UE has a reactive MPE mitigation mechanism. The UE performs a PBO by applying a Power Management-Maximum Power Reduction (P-MPR). The UE sends a Power Headroom Report (PHR) that includes P-MPR information to the network.

Pcmax is the maximum power a UE can transmit and it scales down with P-MPR. The UE determines the Power Headroom (PH) which is the difference between the current transmission power and Pcmax. The P-MPR values are quantized and indicated to the network using a two bit field e.g. 3 ≤ P-MPR < 6, 6 ≤ P-MPR <9, 9 ≤ P-MPR <12, P-MPR ≥ 12 (units dBm).

Referring to FIGs 2A and 2B, in this example, the user equipment (UE) 110 comprises multiple antennas 10. The multiple antennas 10 include one or more serving antennas 10s and one or more non-serving antennas 10n.

The UE 110 is configured for uplink radio communication 70u and downlink radio communication 70d with the network access node 120 using transmission/reception of radio waves.

The one or more serving antennas 10s are used for the transfer of data between the UE 110 and the network access node 120. The one or more non- serving antennas 10n are not used for the transfer of data between the UE 110 and the network access node 120 but that does not mean that they are not used for other purposes such as reference signal reception.

In at least some examples, whether an antenna 10 is a serving antenna 10s or a non-serving antenna 10n is controlled by the UE 110 (not the network) and can be changed by the UE 110. The UE 110 is expected to use the best aligned antenna 10 as the serving antenna 10s.

A Maximum Permissible Exposure (MPE) is a maximum permissible exposure of a user of UE 110 to radio waves transmitted by the user equipment. A Maximum Permissible Exposure (MPE) event 50 is an event that relates to maximum permissible exposure of the user of the UE 110 to radio waves transmitted by the UE 110. It can, for example, relate to current exposure and/or accumulated exposure and/or change in exposure. It can be triggered by a proximity sensor 54 detecting the presence of the user or another object 52.

A directional far field radiation pattern (beam) of an antenna(s) spatially concentrates radiation power. A beam will provide a much higher power density than an omnidirectional radiation pattern when fed with the same maximum power level provided by the power amplifier. Maximum permissible exposure must therefore be monitored and controlled where uplink/transmit beams are used at a UE.

Examples of proximity sensors include, for example, infrared sensors, capacitive sensors, lidar, radar functionality embedded in the antenna array, or other. As such, the UE 10 can autonomously detect user proximity.

Irrespective of whether or not there is a MPE event, a close presence of a user's body or other object 52 may act as a block and degrade the wireless channel (a user blockage event).

A MPE condition may affect a pool of active/configured UL Transmission Configuration Indicator (TCI) states and not DL corresponding TCI states, therefore, if not reported, a MPE event on a candidate beam may be undetected by the network 100.

The baseline behavior would be a gNB scheduling SRS sweep to find a new UL TCI state and then switch state. Latency associated to such a procedure may be non-negligible and there is also the risk of beam failure for the active beam under MPE. A CSI-RS (Channel State Information - Reference Signal) sweep is not performed on candidate UE 110 antennas 10, but only on the serving UE 110 antenna 10s.

Furthermore, the potential existence of the secondary beam pair is not guaranteed and depends directly on the channel conditions, i.e. number of clusters.

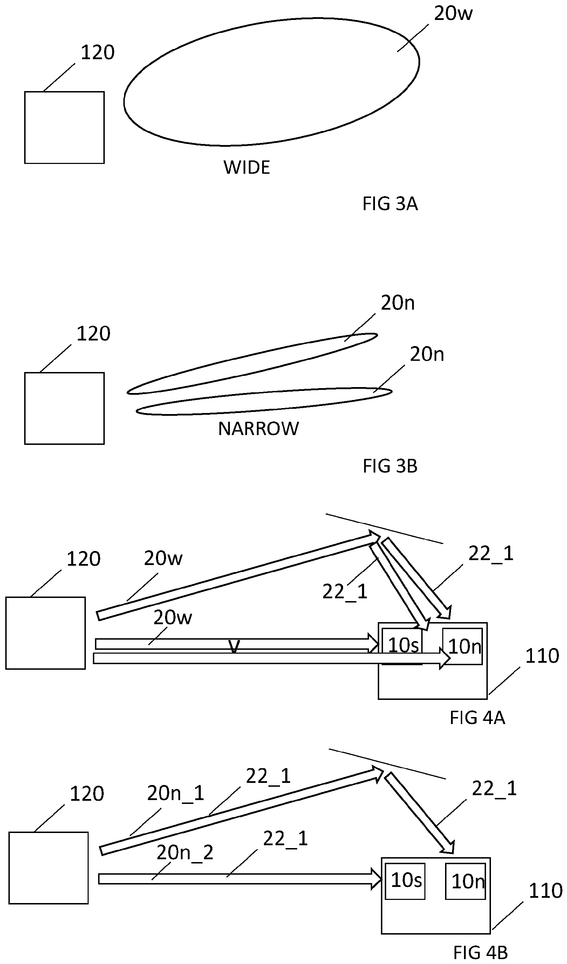

FIG 3A, 3B, 4A, 4B illustrate that the network access node 120 can communicate using beam-forming. Each FIG illustrates a different downlink (network access node) spatial filter. In FIG 3A a wide beam is used for downlink transmission of a wider beam downlink reference signal 20w. In FIG 3B, narrower beams are used for downlink transmission of multiple narrower beam downlink reference signals 20n at different angles of departure. Each beam represents a different downlink spatial filter.

FIG 4A, illustrates how the wider beam downlink reference signals 20 can be received at different antennas 10. To make the illustration clearer, the beams 20w in Fig.4A have been drawn narrower than they would be in reality (see FIG 3A).

In this example, there are different paths from the network access node 120 to the UE 110. The wider beam downlink reference signal 20w will take different paths to the antennas 10. FIG 4 is not to scale and the paths have significant differences in length that depend upon the (unknown) angle of departure from the network access node 120. The wider beam downlink reference signals 20w, will therefore be received at each antenna 10 as a series of clusters with delays between the clusters that depend upon the (unknown) angle of departure from the network access node 120. The received signal strength of each cluster at each antenna 10 can be different. Different features can be used to disambiguate clusters - for example a particular cluster can be identified by its delay spread and/or by power decay. The delay spread at a threshold below the peak (the 'off-peak' delay range) is therefore a good metric for identifying clusters. The best received signal cluster at an antenna 10 has a specific delay range (spread) and this delay range, for example the off-peak delay range, can be associated with the respective antenna 10 to create a first mapping 30_1 (not illustrated in Fig 4A).

FIG 4B illustrates how the different narrower beam downlink reference signals 20 can be best received at different antennas 10.

In this example, there is a direct downlink communication link from the network access node 120 to a serving antenna 10s of the UE 110 - a narrower beam downlink reference signals 20n_2 is best received at the serving antenna 10s. A narrower beam downlink reference signals 20n_1 is best received at the non-serving antenna 10n.

FIG 4 is not to scale and the paths for the different narrower beam downlink reference signals 20n_1, 20n_2 have significant differences in length that depend upon the angle of departure from the network access node 120 of the narrower beam downlink reference signals 20n_1, 20n_2. A particular narrower beam downlink reference signal 20n_i, will therefore be received at the antenna 10 as a cluster with a particular delay. A second mapping 30_2 (not illustrated in Fig 4B) can be used to associate a particular delay with a particular narrower beam downlink reference signal 20n_i and thus with a particular angle of departure.

The different narrower beam downlink reference signals 20n are transmitted as a sweep. That is, they are transmitted in the downlink at different offset departure angles, sequentially rather than simultaneously. There is therefore a time separation between different narrower beam downlink reference signals 20n. Different narrower beam downlink reference signals 20n can, in some examples, therefore be received in a predicably time-space manner at the UE 110.

The antennas 10 of the UE 110 can therefore receive a wider beam downlink reference signal 20w at a particular time delay Δt(k), as a dominant cluster CL(k). Therefore, it is possible to map, in a first mapping 30_1, a candidate antenna cAP(j) to dominant clusters CL(k) and delays Δ(k) e.g., cAP(j) <-> Δt(k).

A serving antenna 10s of the UE 110 can therefore receive a particular candidate narrower beam downlink reference signal 20n_i at a particular time delay Δ(k), as a cluster. A candidate narrower beam downlink reference signal 20n_i is identified using an identifier 22_i that maps to the angle of departure θ(i) of a candidate narrower beam downlink reference signal 20n_i e.g., cCSI(i). Therefore, it is possible to map, in a second mapping 30_2, the angle of departure θ(i) of the candidate narrower beam downlink reference signal 20n_i to the time delay Δ(k) of cluster(k) e.g., cCSI(i) <-> Δt(k).

The first mapping 30_1 and the second mapping 30_2 can be combined to map specific antennas AP(j) to specific CSI(i) e.g., cCSI(i) <-> cAP(j).

In 3GPP, the wider beam downlink reference signal 20w can be a Synchronization Signal Block (SSB) Reference Signal. The user equipment 110 comprises means for measuring SSB-RS beams 20w e.g., RSRP (Reference Signal Received Power) of SSB.

In 3GPP, the narrower beam downlink reference signals 20n can be Channel State Information Reference Signals (CSI-RS). The user equipment 110 comprises means for measuring CSI-RS beams 20n. e.g., RSRP of possible CSI beams 20. The gNB schedules CSI-RS and associates an index for UE 110 to report in a CSI Report e.g., L1-RSRP, L1-SINR, CQI (Channel Quality Indicator) etc. for beam management.

The UE 110 is configured to avoid and/or mitigate a MPE event and/or a user blockage event. The outcome is that the UE 110 uses a candidate antenna 10c (e.g., a non-serving antenna 10n) as a new serving antenna 10s for (at least) uplink transmission.

An alternative or subsequent outcome can be that the UE 110 uses a candidate antenna 10c (e.g., a non-serving antenna 10n) as a new serving antenna 10 for uplink and downlink. The new serving antenna can perform uplink and downlink communication via a new narrow beam at the network access node 120. This, however, requires coordination with the network which is achieved via UE 110 reporting candidate narrow beams to the network. The UE 110 can, for example, report one or more candidate CSI beam indexes 22.

The UE 110 can also be configured to control selection of a candidate antenna 10c, which in some but not necessarily all examples, can be used to help avoid and/or mitigate a maximum permissible exposure (MPE) event or a user blockage event.

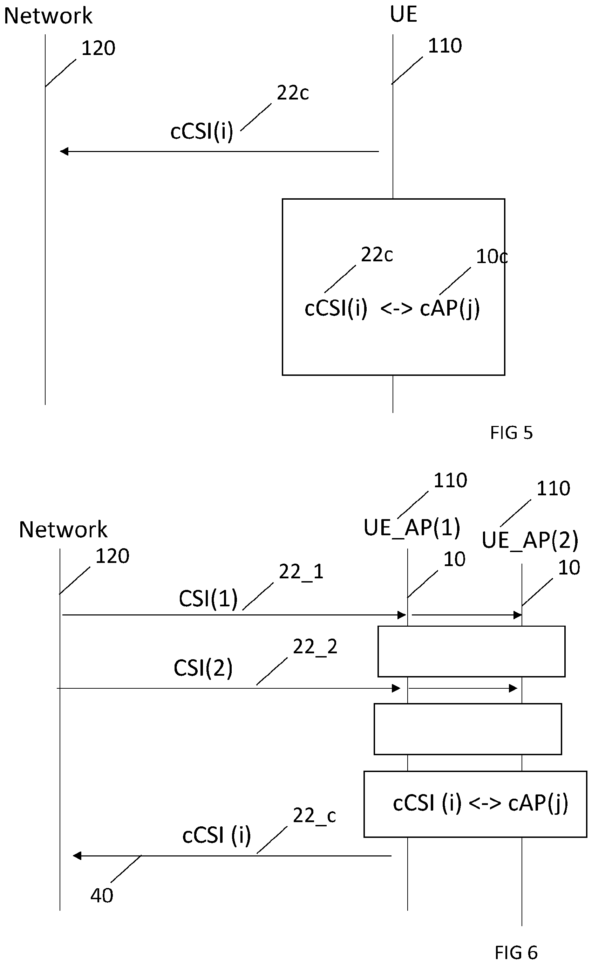

FIG 5 illustrates user equipment 110 (UE 110) comprising means for:
reporting at least one candidate CSI beam index 22 to the network 100 to avoid and/or mitigate a maximum permissible exposure (MPE) event 50;
wherein the user equipment 110 associates at least one candidate antenna 10c (cAP(j)) of the user equipment 110 to the at least one candidate CSI beam index 22 (cCSI(i)).

The candidate antenna 10c is the antenna 10 that represents a candidate antenna 10 for downlink reception.

The candidate CSI beam index 22c (cCSI(i)) is the beam index of a CSI beam 20n_i that represents a candidate angle of departure for downlink transmission.

The candidate CSI beam index 22c (cCSI(i)) is a non-serving candidate CSI beam index when the beam index represents a candidate angle of departure for downlink transmission that is not currently in use for downlink communication to the UE 110. That is, it is non-serving with respect to the UE 110. Thus, the one or more non-serving candidate CSI beam indexes 22 are associated with at least one candidate antenna cAP(j) 10c that does not serve, at least in downlink, a serving CSI beam index 22.

The term 'non-serving' in this context can also be called "non-selected" or "not-indicated" in the 3GPP Specifications.

In some examples, as illustrated in FIG 6, the UE 110 is configured to report multiple non-serving candidate CSI beam indexes 22c to the network 100.

In some examples this can be in response to power backoff at the UE 110 as a consequence of a maximum permissible exposure (MPE) event 50.

The user equipment 110 can associate at least one non-serving antenna 10n of the user equipment 110 to the multiple non-serving candidate CSI beam indexes 22c. For example, the user equipment 110 can associate multiple non-serving antennas 10n of the user equipment 110 to the multiple non-serving candidate CSI beam indexes 22.

In at least some examples, the at least one candidate CSI beam index 22c is reported to the network 100 in a Power Headroom Report (PHR) 40. In at least some examples, the PHR 40 is used to report, to the network 100, an allowed reduction of maximum power level (e.g., P-MPR) for the at least one candidate CSI beam index 22c. Maximum Power Reduction (MPR) defines an allowed reduction of maximum power level. For example, MPE P-MPR is the power backoff to meet the MPE FR2 requirements for a Serving Cell operating on FR2.

The Power Headroom Report (PHR) 40 reporting the new at least one candidate CSI beam index 22c, in some examples, informs the network 100 of a MPE event 50. In some examples, it is sent as a consequence of a MPE event 50. In some examples it comprises multiple MPE P-MPR reports. In some examples it informs the network 100 of power back-off at the UE 110. In some examples, it is sent in response to power backoff at the UE 110 as a consequence of a maximum permissible exposure (MPE) event 50.

The combination of a candidate antenna 10c of the user equipment 110 and the angle of departure for the associated candidate CSI beam index 22c can, for example, have a lower power backoff requirement than the combination of the current serving antenna 10s of the user equipment 110 and the angle of departure for the serving CSI beam index 22s. The combination of a candidate antenna 10c of the user equipment 110 and the angle of departure for the associated candidate CSI beam index 22c can, for example, have no power backoff requirement.

The MPE event 50 that is avoided and/or mitigated by reporting the at least one candidate CSI beam index 22c to the network 100 is associated with a serving antenna 10s different to the at least one candidate antenna 10c of the user equipment 110 associated to the at least one candidate CSI beam index 22c. The at least one candidate antenna 10c of the user equipment 110 does not have a MPE event or has a less severe MPE event than the MPE event at the serving antenna 10s.

The at least one serving antenna 10s communicates via a beam associated with at least one serving CSI beam index 22s. The at least one serving antenna 10s is different to the at least one candidate antenna 10c. In at least some examples, the at least one serving CSI beam index 22s, associated with the serving antenna 10s, is different to the reported at least one candidate CSI beam index 22c associated with the at least one candidate antenna 10c.

The UE 110 is configured to associate a candidate antenna 10c and a candidate CSI beam index 22c because the combination of candidate antenna 10c and associated candidate CSI beam index 22c is usable and has a lower power backoff requirement than the combination of the serving antenna 10s and the associated serving CSI beam index 22s.

The UE 110 can configure its maximum output power. The configured UE 110 maximum output power PC_{MAX,f,c} for carrier f of a serving cell c. P-MPRf,c is the power management maximum output power reduction. The UE 110 shall apply P-MPRf,c for carrier f of serving cell c to ensure compliance with applicable electromagnetic power density exposure requirements and in case of proximity detection is used to address such requirements that require a lower maximum output power. The UE 110 reports P-MPRf,c when the reporting conditions configured by gNB are met.

MPE P-MPR is the power backoff to meet the MPE FR2 requirements for a Serving Cell operating on FR2 and is included in a PHR 40. A Power headroom report 40 (PHR) can be triggered, and sent as a MPE P-MPR report, in response to any of the following events: a periodic timer expires, the measured P-MPR is equal to or larger than a MPE-Threshold for at least one activated FR2 Serving Cell since the last transmission of a PHR by the UE 110, the measured P-MPR has changed more than PHR-Tx-PowerFactorChange dB.

The PHR 40 is enhanced with SSBRI/CRI and P-MPR for serving beam and for up to 4 additional candidate beams 20. SSBRI is SS/PBCH which is the Synchronization Signal (SS) (Physical Broadcasting channel) Block Resource Indicator. CRI is the CSI Reference Signal Resource Indicator. In addition to the existing field in the PHR MAC-CE, N≥1 P-MPR values can be reported. MAC-CE is Medium Access Control. The N P-MPR values are reported together with the following: For each P-MPR value, up to M SSBRI(s)/CRI(s), where the SSBRI(s)/CRI(s) is selected by the UE 110 from a candidate SSB/CSI-RS resource pool. The PHR MAC report 40 is extended from having a single MPE value for a serving gNB beam to become an extended PHR Report with up to 5 values of MPE each associated to a CSI beam index (1 for serving + 4 for candidates). The extended PHR 40 includes MPE P-MPRᵢ for candidate CSI beam index 22_i, where MPE P-MPRᵢ is the power backoff applied by UE 110 to meet the MPE FR2 requirements for a Serving Cell (with non-serving CSI beam index 22 i) operating on FR2.

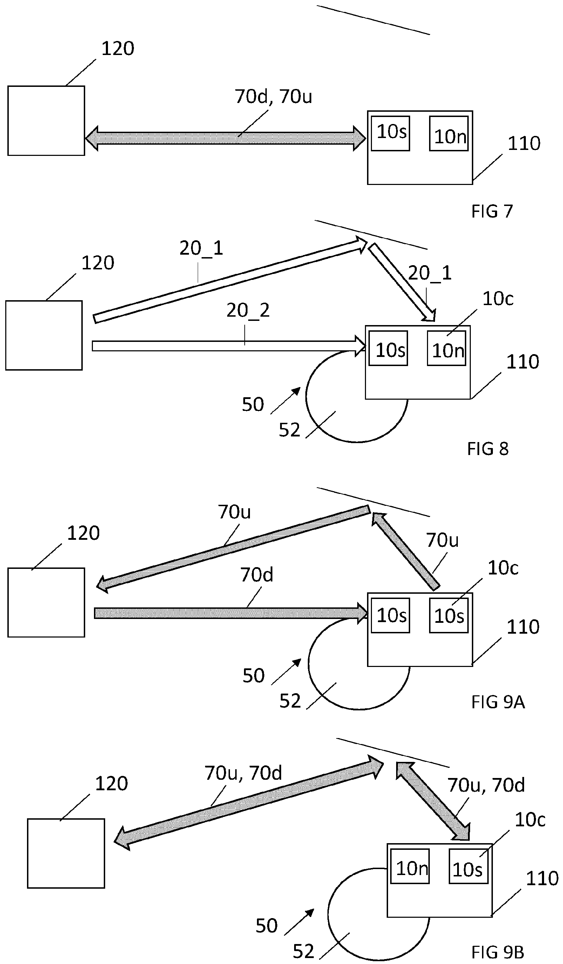

FIG 7 illustrates an example in which the network node 120 and the user equipment (UE) 110 are configured to perform uplink data communication 70u and downlink data communication 70d. The network node 120 and the UE 110 are performing uplink data communication 70u and downlink data communication 70d via the serving antenna 10s of the UE 110 and not via the one or more non-serving antennas 10n of the UE 110.

FIG 8 illustrates a MPE event 50 caused by object 52.

The narrower beam reference signal 20 that is best received by the UE 110 before the MPE event 50 is the narrower beam reference signal 20_2. The antenna 10 that best receives the narrower beam reference signal 20_2 operates as the serving antenna 10s.

During the MPE event 50, the narrower beam reference signal 20_2 is no longer best received by the UE 110. The narrower beam reference signal 20 that is best received by the UE 110 during the MPE event 50 is the narrower beam reference signal 20_1. The antenna 10 that best receives the narrower beam reference signal 20_1 is a non-serving antenna 10n which is used as a candidate antenna 10c.

The serving antenna 10s is under MPE, and the non-serving antenna 10n is under a smaller P-MPR value of MPE or not under MPE at all. It is therefore desirable to switch antennas 10 for at least uplink communication 70u. This is illustrated in FIG 9A.

This can work if the current CSI beam can be seen from the non-serving antenna 10n with a good signal level. If the UE 110 changes antenna 10 before reporting and still can receive data on the alternative non-serving antenna 10n from the same CSI - then MPE is solved but not necessarily optimally. It is often the case that a new CSI beam can be seen from the non-serving antenna 10n with a better signal level. If the UE 110 switches without reporting, then the network 100 is not aware.

It is therefore also desirable for the UE 110 to communicate with the network 100 so that the uplink communication 70u and downlink communication 70d at the network access point 120 can both switch from using a narrower beam associated with the narrower beam reference signal 20_2 to using a narrower beam associated with the narrower beam reference signal 20_1. This is illustrated in FIG 9B

In at least some examples, the UE 110 makes the decision to change which antenna it is using for uplink communications 70u before or after reporting. The UE 110 can be configured to switch to using a non-serving antenna 10n of the user equipment 110 associated with a candidate CSI beam index 22c that is, has been, or will be reported.

The reporting before switching at the UE 110 is required if the current CSI beam cannot be seen from the non-serving antenna 10n with a good signal level. Switching to that antenna requires reporting to the gNB 120 so that the gNB can switch CSI beam to maintain a good link.

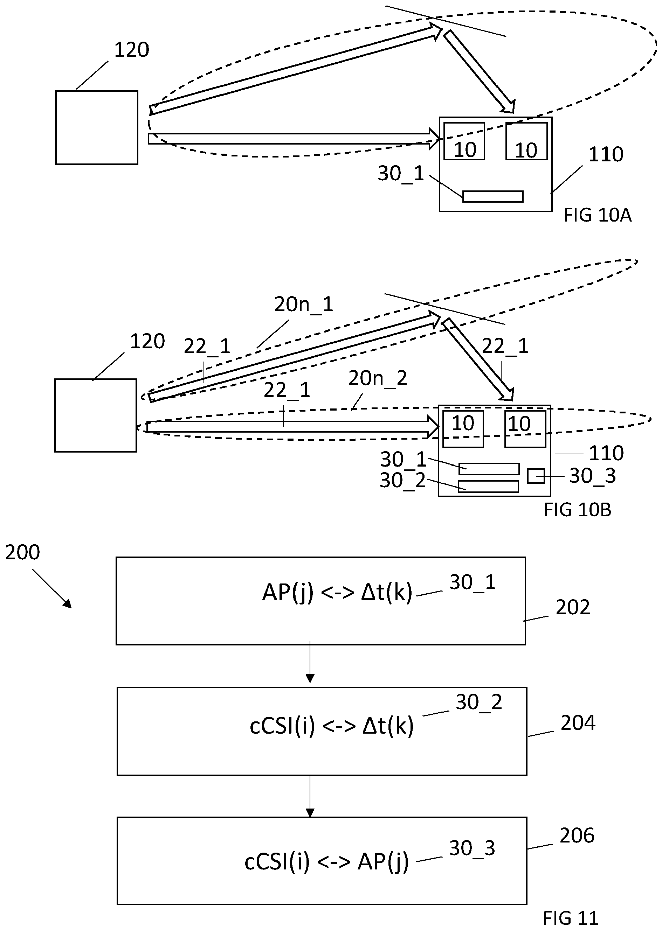

FIG 10A, 10B illustrate how the user equipment (UE) 110 can find a new candidate beam and report the candidate beam to the network.

The UE 110 is configured to:
create a first mapping 30_1 of antennas 10 to downlink path delay intervals using a wider beam downlink reference signal 20w transmitted from the network access node 120 (see FIG 10A);
create a second mapping 30_2 of downlink path delay intervals to downlink spatial filters (e.g. downlink angles of departure) using different narrower beam reference signals 20n_1, 20_2 (see FIG 10B); and
control association of the at least one non-serving antenna 10n and at least one candidate CSI beam index 22c based on the first mapping 30_1 and the second mapping 30_2.

It can create the second mapping 30_2 of downlink path delay intervals to downlink spatial filter (e.g. downlink angles of departure) using different narrower beam reference signals 20n identified using CSI beam indexes 22.

The UE 110 can control the selection of an antenna 10 based on the first mapping 30_1 and the second mapping 30_2. The antenna 10 can, for example, be selected as a candidate antenna 10c.

In at least some examples, the candidate CSI beam index 22c can be reported to the network as previously described.

The UE 110 can, for example, be configured to create a third mapping 30_3 of antennas 10 to downlink spatial filters (e.g. angles of departure) by combining the first mapping 30_1 and the second mapping 30_2. The third mapping 30_3 can, for example, then be used to control the selection of an antenna 10.

In at least some examples, the wider beam downlink reference signal 20w is a Synchronization Signal Block (SSB) reference signal or a Channel State Information Reference Signal (CSI-RS).

The creation of the first mapping 30_1 can be initiated when SSB is detected. The creation of the second mapping 30_2 can be initiated when the P2 CSI-RS angular sweep of multiple narrower beam reference signals 20n is detected.

As previously described, the UE 110 is configured to inform the network 100 of one or more candidate CSI beam indexes 22c before it switches to use the selected antenna and/or configured to inform the network 100 after it switches to use the selected antenna 10.

As previously described, in at least some examples, the UE 110 is configured to inform the network 100 of one or more candidate CSI beam indexes 22c in response to an event that impacts a quality of a communication channel associated with antenna e.g., maximum permissible exposure event.

In at least some examples, the UE 110 controls which antenna used for uplink transmission 70u.

The UE 110 can be configured to inform the network 100 of one or more candidate CSI beam indexes 22c to mitigate a maximum permissible exposure event.

The UE 110 can be configured to report a narrower beam reference signal 20n to the network 100, for example using a candidate CSI beam indexes 22c. In some examples, the UE 110 is configured to report the narrower beam reference signal 20n to the network 100 in a maximum permissible exposure event (MPE) event message informing the network 100 of power back-off at the UE 110.

In some examples, the UE 110 is configured to inform the network 100 of one or more candidate CSI beam indexes 22c when better quality is available on the selected/candidate antenna 10c compared to the current in-use antenna 10s when using a different angle of departure to the current in-use angle of departure.

In some examples, the UE 110 is configured to switch to use the selected/candidate antenna 10c when better quality is available on the selected/candidate antenna 10c compared to the current in-use antenna 10s when using a same angle of departure to the current in-use angle of departure.

In some examples, the UE 110 is configured to remain using the current in-use antenna 10s when better quality is not available on a different antenna 10 with the same or different angle of departure.

Better quality can, for example, be assessed by the UE 110 using downlink quality measurements and availability can be assessed using power headroom available for the antenna. Better quality may require a measurement of quality to exceed a threshold difference.

FIG 11 illustrates a method that, in at least some examples, is performed by the UE110.

At block 202, the UE 110, creates a first mapping 30_1 of antennas to downlink path delay intervals using a wider beam downlink reference signal 20w.

At block 204, the UE 110, creates a second mapping 30_2 of downlink path delay intervals to downlink spatial filters (e.g. angles of departure) using different narrower beam reference signals 20n.

At block 206, the UE 110, in some examples controls the selection of one or more antennas 10 based on the first mapping 30_1 and the second mapping 30_2.

In some examples, the UE 110, creates a third mapping 30_3 of antennas 10 to downlink spatial filters (e.g. angles of departure) by combining the first mapping 30_1 and the second mapping 30_2. The selection of the antenna(s) can be based on the third mapping 30_3.

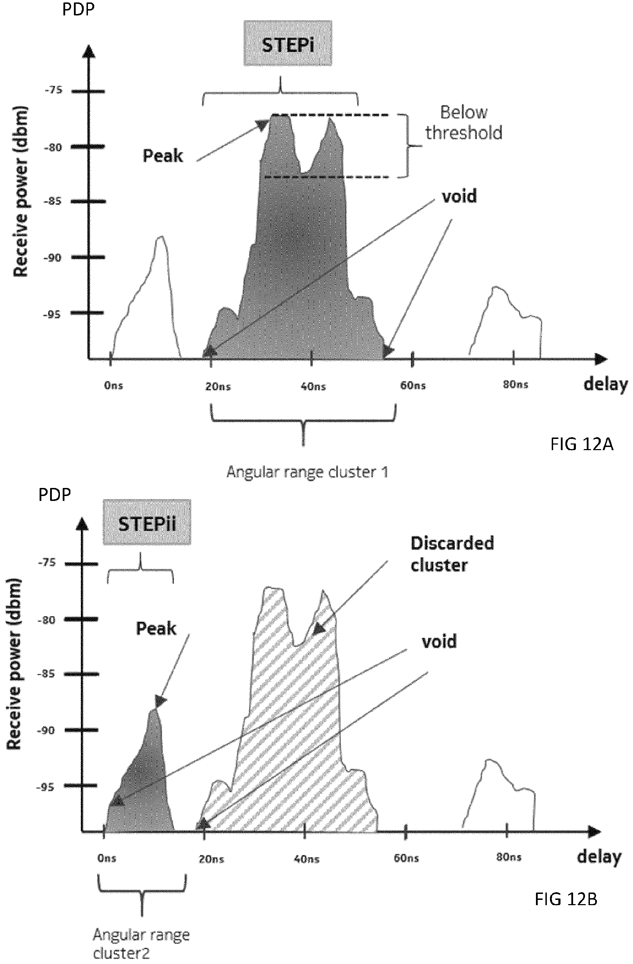

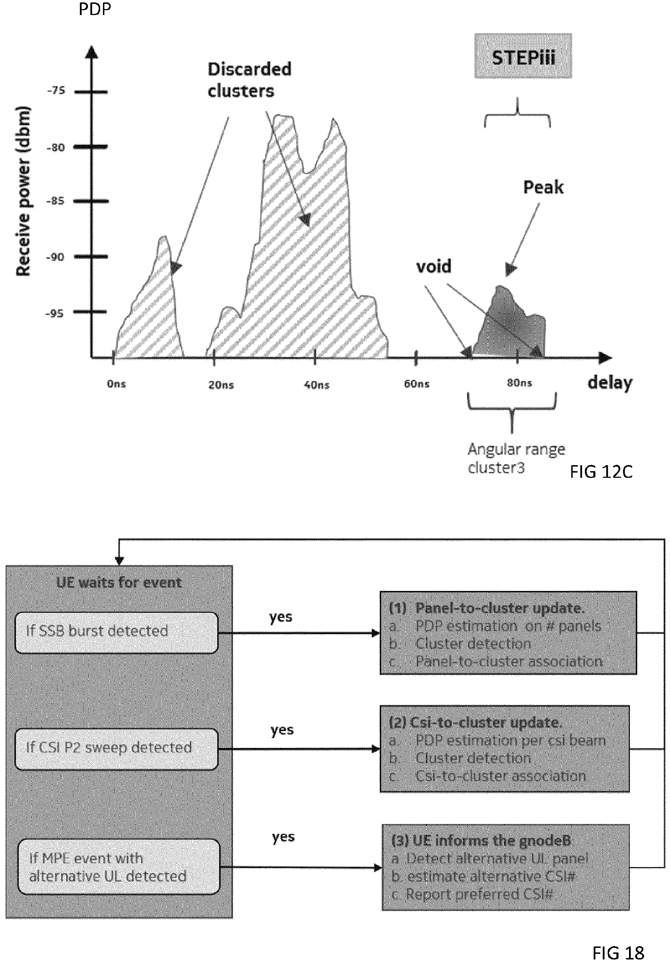

A downlink path delay interval is associated with a cluster. A cluster is a group of rays that share a common angle of departure and a common angle of arrival. FIGs 12A, 12B, 12C illustrate an example of an algorithm for cluster detection.

Figs 12A, 12B, 12C illustrate a Power Delay Profile (PDP) for an antenna 10 of a UE 110 at different stages of processing. The processing is cluster by cluster.

The Power Delay Profile (PDP) plots received power (y-axis) for a reference signal against time delay (x-axis).

Each cluster has a distinctive delay and delay range corresponding to a particular path- a particular angle of departure from the network access node 120 and angle of arrival at the UE 110.

As illustrated in FIG 12A, the UE 110 first detects, from the PDP of the serving antenna 10s of the UE 110 the strongest peak, the first peak (peak1), of power and associated delay. To identify the associated delay, the UE 110 may define a first delay range (DR1) around the strongest peak based on a power loss threshold on each "side" of the peak. This first delay range (DR1) defines a first cluster (CL1).

The samples of the angular range of cluster CL1 are discarded. As illustrated in FIG 12B, the UE 110 then moves to find the next cluster peak by detecting the strongest peak outside of the delay range of the first cluster CL1. A second delay range around this second peak (peak2) is then estimated based on a power loss threshold on each "side" of the second peak. This second delay range (DR2) defines a second cluster (CL2).

The method as illustrated in FIG 12B is repeated until all clusters have been identified. FIG 12C illustrates its repetition to detect a third peak that has a third delay range (DR3) that defines a third cluster (CL3).

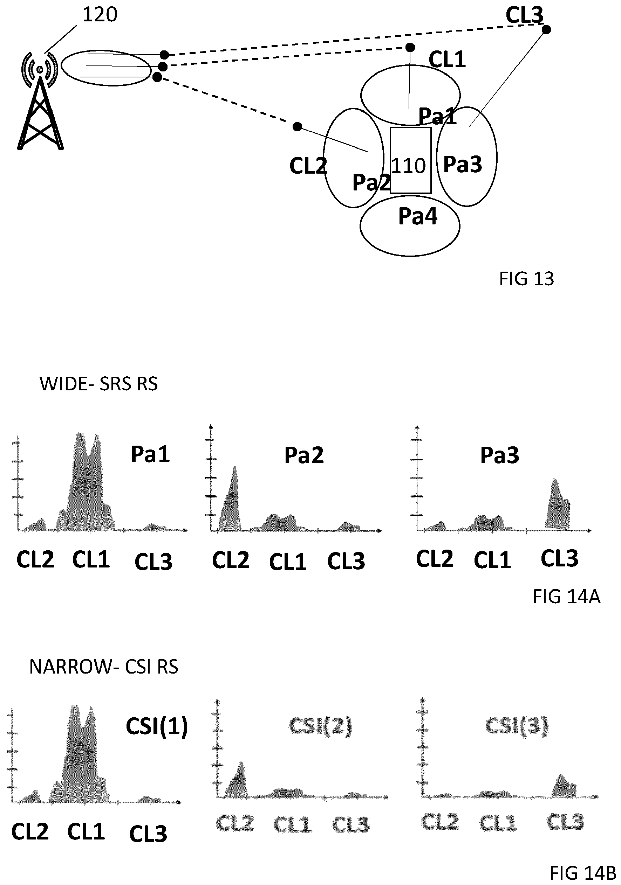

FIG 13 illustrates a network access node 120 communicating with a UE 110 as previously described. The UE 110 has a plurality of antennas Pa1, Pa2, Pa3, Pa4.

The combinations of direction of departure and direction of arrival associated with each antenna has corresponding clusters CL1, CL2, CL3.

The cluster CL2 represents the shortest path (least delay) between the network access node 120 and the UE 110. The cluster CL3 represents the longest path (greatest delay) between the network access node 120 and the UE 110. The cluster CL1 represents the intermediate length path (intermediate delay) between the network access node 120 and the UE 110. Clusters can therefore be identified by time delay.

As illustrated in FIG 14A, the PDPs for the different antennas, when receiving a wider downlink beam are used to create the first mapping 30_1. The first mapping 30_1 map antennas (AP(j)) 10 to downlink path delay intervals Δt(k) or clusters CL(k).

Although the following description refers to a 'panel' or antenna panel', it can be a single antenna element or an array of antenna elements.

In some but not necessarily all examples, the creation of the first mapping 30_1 comprises:
performing a power delay profile estimation for each antenna using the wider beam downlink reference signal 20w;
for each antenna, grouping peak delays in the power delay profile for the antenna as downlink path delay intervals (clusters) for that antenna to provide the first mapping 30_1 of antennas to downlink path delay intervals.

The downlink path delays are taps in a Channel Impulse Response (CIR).

The UE 110 identifies the dominant cluster per antenna/panel as well as its associated delay range to create the first mapping 30_1. The clusters may be uniquely identified by a delay range and then mapped onto different UE 110 antennas/panels. In case a cluster has similar gain on multiple UE antenna/panels, the given cluster is associated to those multiple antennas/panels.

The series of Power Delay Profiles (PDPs) for a serving SSB beam (i.e., at least one PDP per UE antenna/panel for the serving SSB) is illustrated in FIGs 14.

The UE 110 can be configured to estimate a series of Channel Impulse Responses (CIR) for a given beam pair combination (i.e., reception of serving SSB for each antenna/panel) based on SSBs (Primary Synchronization Signal (PSS); Secondary Synchronization Signal (SSS); and reference signal Demodulation Reference signal (DMRS) and data aided via the Physical Broadcast Channel (PBCH)), and average them to get a Power Delay Profile (PDP).

If the total number of clusters is larger than 1 and at least one of the detected clusters is received with higher power on a non-serving UE antenna/panel, the UE 110 will associate that cluster with a specific UE 110 antenna/panel, i.e., each antenna/panel is associated to at least one dominant cluster identified using its delay range. In case a cluster has similar gain (within a threshold determined by UE 110) on multiple UE antennas/panels the given cluster is associated to those multiple antennas/panels.

Each antenna/panel spatial filter tends to prioritize/amplify the cluster with a similar Angle of Arrival as the boresight of the antenna/panel radiation pattern.

As illustrated in FIG 14B, the PDPs for the serving antenna 10s for different received narrower downlink beams are used to create the second mapping 30_2.

The second mapping 30_2 maps downlink spatial filters (e.g. angles of departure) θ(i) to downlink path delay intervals Δt(k) or clusters CL(k). The downlink spatial filters (e.g. angles of departure) θ(i) are associated with candidate CSI beam indexes 22c (cCS(i)).

In some but not necessarily all examples, the creation of the second mapping 30_2 comprises:
performing a power delay profile estimation for different downlink spatial filters (e.g. angles of departure) using an antenna 10s to receive a sweep of narrower beam reference signals 20n that have at least the different downlink spatial filters (e.g. angles of departure);
for each of the different downlink spatial filters (e.g. angles of departure), group peak delays in the power delay profile for a downlink angle of departure with downlink path delay intervals for that downlink angle of departure to provide the second mapping 30_2 of downlink path delay intervals to downlink spatial filters (e.g. angles of departure).

The UE 110 associates clusters to CSI beam index 22 as received on serving antenna/panel. The unique delay range associated to each cluster may map onto different CSI-RS indices.

The UE 110 performs the following steps:
The UE 110 estimates a PDP for each CSI-RS slot during P2 sweep using the UE 110 serving antennas/panel 10s with fixed beam pattern during the csi-rs sweep.

For each PDP the UE 110 makes a radio channel cluster detection using the method described above in relation to FIGs 12A to 12C.

The UE 110 compares the clusters (delays) detected on the SSB to the PDP of each CSI-RS received on serving antenna/panel 10s. The unique delay range associated to each cluster from the SSB may map onto a different CSI-RS index. A "CSI-to-Cluster" association table may be used for the second mapping 30_2.

The first mapping 30_1 [ cCSI(i) <-> Δt(k)] is combined with the second mapping [ AP(j) <-> Δt(k)]. This produces a third mapping 30_3 [cCSI(i) <-> Δt(k) <-> AP(j) = cCSI(i) <-> AP(j)].

The third mapping 30_3 maps antennas (AP(j)) 10 to downlink angles of departure θ(i) associated with candidate CSI beam indexes (cCS(i)) 22c.

The UE 110 can then make a decision on whether a pairing of an alternative candidate narrow beam and an alternative candidate antenna 10c is better than the current pairing of serving narrow beam and current serving antenna 10s. If so, the UE 100 can report the CSI beam index(es) 22 representing the alternative candidate narrow beam(s).

In some examples, the UE 110 detects an alternative beam pair (alternative CSI beam and alternative UE antenna/panel). The UE 110 calculates RSRP on alternative UE antenna/panel. The UE 110 compares RSRP on alternative antenna/panel to serving UE antenna/panel receiving serving gNB beam which provide a delta RSRP. The UE 110 calculates virtual Pcmax of alternative UE antenna/panel (i.e. the maximum achievable PA Tx power on alternative UE antenna/panel which may scale with MPR, MPE, P-MPR, A-MPR, etc. ) The UE 110 calculates virtual Power Headroom (PH) of alternative UE antenna/panel for connection with alternative CSI beam, based on virtual Pcmax. The UE 110 compares virtual PH on alternative UE 110 beam pair to current PH on serving UE antenna/panel connected to serving gNB beam as delta PH.

If delta RSRP ≤ delta PH, UE 110 may exhibit better UL performance by switching to alternative beam pair. If this is true, the UE 110 reports to the network 100 the CSI-RS resource indicator (CRI) of the alternative CSI beam, i.e. UE 110 triggers SSBRI/CRI reporting of alternative beam to gNB.

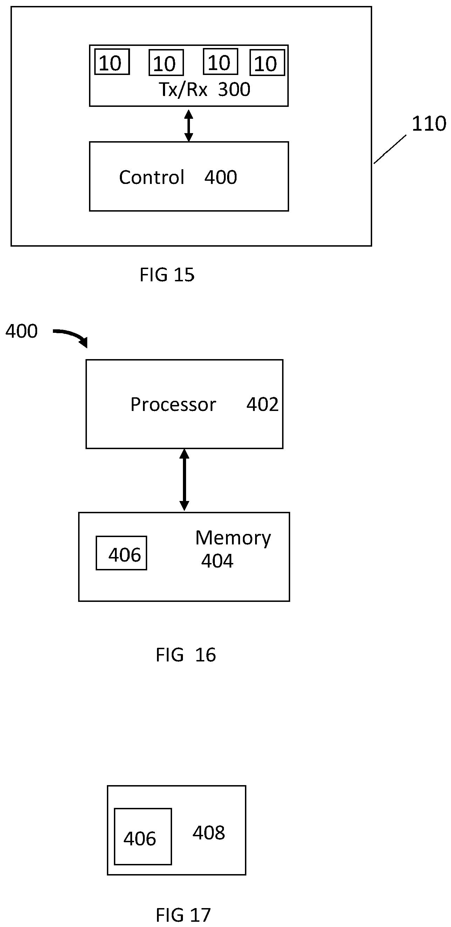

FIG 15 illustrates an example of user equipment 110. The user equipment comprises means for control, for example a controller 400 and radio transceiver (Tx/Rx) circuitry 300. The radio transceiver circuitry comprises the multiple antennas 10.

The controller 400 can be configured to operate in the digital domain. The radio transceiver circuitry is configured to operate, at least partially, in the radio frequency domain.

The control of the antennas 10 is controlled by controller 400. The controller 400 can take RSRP measurements from different physical layer (PHY) and reference signals such as PSS, SSS, DMRS, CSI-RS, PBCH, etc.

The digital signal from the RF interface is received at the controller 400 which performs coarse and refined synchronization (via PSS and SSS), then removes the Cyclic prefix samples, performs an FFT which then leads to the key signal for both equalization and channel estimation. The antenna/antenna panel/Beam manager function of the controller uses a variety of signals coming from the channel estimation unit (mainly power estimation signals such as RSRP, RSSI, etc, from different antennas/panels, beams 20 at UE 110 and SSB and CSI beams 20 at the gNB). This manager represents the central decision unit at the UE 110 to control which antennas/panels to switch on when and which beams 20 at the UE 110 to use. It is closely tied with the downlink control signaling that to some extent dictates what the UE 110 must do and when. For example, it must decode the SSBs that have a reporting requirement, also it must decode the CORESET with the PDCCH intended for the UE 110.

Fig 16 illustrates an example of a controller 400. The controller may be used in any suitable apparatus, for example the UE 110 or the network access node 120 e.g. gNB. Implementation of a controller 400 may be as controller circuitry. The controller 400 may be implemented in hardware alone, have certain aspects in software including firmware alone or can be a combination of hardware and software (including firmware).

As illustrated in Fig 16 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 110, 120 when loaded into the processor 402. The computer program instructions, of the computer program 406, provide the logic and routines that enables the apparatus to perform the methods illustrated in the Figs and described. The processor 402 by reading the memory 404 is able to load and execute the computer program 406.

The apparatus 110, 120 therefore comprises:
at least one processor 402; and
at least one memory 404 including computer program code;
the at least one memory 404 and the computer program code configured to, with the at least one processor 402, cause the apparatus 110, 120 at least to perform: creating a first mapping 30_1 of antennas to downlink path delay intervals using a wider beam downlink reference signal 20w;
creating a second mapping 30_2 of downlink path delay intervals to downlink spatial filters (e.g. angles of departure) using different narrower beam reference signals 20n; and
controlling the selection of an antenna based on the first mapping 30_1 and the second mapping 30_2.

As illustrated in Fig 17, the computer program 406 may arrive at the apparatus 110, 120 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 110, 120 may propagate or transmit the computer program 406 as a computer data signal.

Computer program instructions for causing an apparatus to perform at least the following or for performing at least the following:
creating a first mapping 30_1 of antennas to downlink path delay intervals using a wider beam downlink reference signal 20w;
creating a second mapping 30_2 of downlink path delay intervals to downlink spatial filters (e.g. angles of departure) using different narrower beam reference signals 20n; and
controlling the selection of an antenna based on the first mapping 30_1 and the second mapping 30_2.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

As illustrated in summary in FIG 18, this disclosure describes using the periodic Synchronization Signal Block (SSB) burst measurements on all UE antenna/panels to detect whether:
the serving SSB (containing the active CSI beam) is detected on multiple antennas/panels,
the serving SSB contains multiple clusters and
the multiple clusters of the serving SSB are dominantly received on different UE antenna/panels e.g., panel 1 detects cluster 1 above a threshold while panel 2 detects cluster 2 above a threshold (where the threshold may be UE 110 implementation specific at e.g., larger than 6 dB below maximum received power in channel impulse response).

When all the above is true, it means that an alternative UE 110 antenna/panel to the current serving antenna may see a cluster undetected by the serving antenna. This means that the SSB might contain at least a second CSI beam which is best received on a different UE 110 antenna.

Thus, having detected Power Delay Profile radio channel clusters based on gNodeB SSB and UE 110 antenna/panel sweeps, the UE 110 associates the clusters of the serving SSB (comprising serving CSI beam) to the UE antenna/panels.

Consequently, upon detection of a possible secondary beam pair (via CSI-RS P2 sweep), the UE 110 may report the corresponding CSI-RS Resource Indicator (CRI) to the network 100 under MPE to activate this link of UL transmission.

The UE 110 detects Power Delay Profile radio channel clusters based on gNB CSI-RS beam sweep (P2) and then associates the clusters identified with SSB to the CSI-RS beam IDs.

Next, the UE 110 indicates - under MPE event - the CSI beam ID (CSI#) detected for alternative link as an outcome of the two previous steps, if a MPE-free antenna/panel detects an alternative CSI beam not previously configured/activated. This CSI beam ID CSI# would not otherwise be selected because the serving antenna/panel would receive it at too low a received power level.

The overall bandwidth of the signal will determine the delay resolution available for the Channel Impulse Response (CIR) estimation. This means that a SSB that consists of 240 subcarriers of 120kHz will occupy 28.8 MHz bandwidth will have a CIR delay resolution of 34ns per sample without any further resolution increase techniques such as compressed sensing or others. A CSI-RS signal of 400 MHz bandwidth will have a CIR delay resolution of 2.5ns per sample. As these delays represent different time of arrivals of replicas of the same gNB signal at the UE 110, one can map their delay difference to a distance difference in the cluster trajectories lengths. Since the speed of light travels at 30 cm per ns, a CIR resolution of 2.5 ns would mean that the UE 110 could capture trajectory distance differences of 75cm per CIR delay sample using full bandwidth CSI-RS, whereas this would be 10.2 meters per CIR delay sample using SSB signals.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analogue and/or digital circuitry) and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network 100 device, or other computing or network 100 device.

The blocks illustrated in the Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

There a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The UE 110 can be a module.

A user equipment can for example be one of a mobile phone, a laptop, a tablet, an Internet of Things device, etc.

The above-described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; network 100s including cellular, non-cellular, and optical network 100s; ad-hoc network 100s; the internet; the internet of things; virtualized network 100s; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above. Explicitly indicate that features from different examples (e.g. different methods with different flow charts) can be combined, to

Although functions have been described with reference to certain features, those functions may be performable by other features whether described or not.

Although features have been described with reference to certain examples, those features may also be present in other examples whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

### Acronyms

Third Generation Partnership Project (3GPP)
Access and Mobility management Function (AMF)
Block Resource Indicator (BRI).
Candidate antenna (cAP)
candidate CSI beam index cCSI(i)
Channel Impulse Responses (CIR)
Channel State Information - Reference Signal (CSI-RS)
Channel State Information (CSI)
Cluster (CL)
Control Resource Set (CORESET)
CQI (Channel Quality Indicator)
Channel State Information (CSI)
CSI Reference Signal Resource Indicator (CRI)
CSI Reference Signal (CSI-RS)
Demodulation Reference signal (DMRS)
Downlink (DL)
E-UTRAN NodeBs (eNBs)
Evolved Universal Terrestrial Radio Access network (E-UTRAN).
gNodeB (gNB)
Maximum Power Reduction (MPR)
Medium Access Control (MAC)
Medium Access Control Element (MAC-CE)
Mobility Management Entity (MME)
New Radio (NR)
Physical Broadcast Channel (PBCH)
Physical Downlink Control Channel (PDCCH)
Physical layer (PHY)
Power Delay Profile (PDP)
Power Headroom (PH)
Power Management-Maximum Power Reduction (P-MPR)
Primary Synchronization Signal (PSS);
Radio Access Network (RAN)
Reference Signal Received Power (RSRP)
Received Signal Strength Indicator (RSSI)
Secondary Synchronization Signal (SSS)
Synchronization Signal (SS)
Synchronization Signal Block Resource Indicator (SSBRI)
Synchronization Signal Block (SSB)
Transmission Configuration Indicator (TCI)
User Equipment (UE)
Uplink (UL)

## Claims

1. User equipment (UE) comprising means for:
reporting at least one candidate CSI beam index to a network to avoid and/or
mitigate a maximum permissible exposure (MPE) event;
wherein
the user equipment associates at least one candidate antenna of the user equipment to the at least one candidate CSI beam index.

2. User equipment as claimed in claim 1, comprising means for reporting at least one candidate CSI beam index to the network in a Power Headroom Report.

3. User equipment as claimed in claim 1 or 2, comprising means for reporting, to the network, allowed reduction of maximum power level for the at least one candidate CSI beam index.

4. User equipment as claimed in any preceding claim comprising means for reporting multiple non-serving candidate CSI beam indexes to the network to avoid and/or mitigate a maximum permissible exposure (MPE) event.

5. User equipment as claimed in claim 4, wherein the user equipment associates at least one non-serving antenna of the user equipment to the multiple non-serving candidate CSI beam indexes and/or the user equipment associates multiple non-serving antennas of the user equipment to the multiple non-serving candidate CSI beam indexes.

6. User equipment as claimed in any preceding claim,
wherein the MPE event that is avoided and/or mitigated by reporting the at least one candidate CSI beam index to the network is associated with a serving antenna different to the at least one candidate antenna of the user equipment associated to the at least one candidate CSI beam index and wherein the at least one candidate antenna of the user equipment does not have a MPE event or has a less severe MPE event than the MPE event at the serving antenna.

7. User equipment as claimed in any preceding claim, comprising:
means for using at least one serving antenna to communicate via a beam associated with at least one serving CSI beam index, wherein the at least one serving antenna is different to the at least one candidate antenna and wherein the at least one serving CSI beam index, associated with the serving antenna, is different to the reporting the at least one candidate CSI beam index associated with the at least one candidate antenna;
means for associating a candidate antenna and a candidate CSI beam index in response to the combination of candidate antenna and associated candidate CSI beam index being usable and having a lower power backoff requirement than the combination of the serving antenna and the associated serving CSI beam index.

8. User equipment as claimed in any preceding claim, wherein the one or more non-serving candidate CSI beam indexes are associated with at least one candidate antenna panel that does not serve, at least in downlink, a serving CSI beam index.

9. User equipment as claimed in any preceding claim comprising means for switching to using a non-serving antenna of the user equipment associated with a candidate CSI beam index that is, has been, or will be reported.

10. User equipment as claimed in any preceding claim comprising means for:
creating a first mapping of antennas to downlink path delay intervals using a wider beam downlink reference signal;
creating a second mapping of downlink path delay intervals to downlink spatial filters, optionally downlink angles of departure, using different narrower beam reference signals identified using CSI beam indexes; and
controlling association of the at least one non-serving antenna and at least one candidate CSI beam index based on the first mapping and the second mapping.

11. User equipment as claimed in claim 10 comprising means configured to: control the selection of an antenna based on the first mapping and the second mapping.

12. User equipment as claimed in claim 10 or 11 wherein creating the first mapping comprises:
performing a power delay profile estimation for each antenna using the wider beam downlink reference signal;
for each antenna, grouping peak delays in the power delay profile for the antenna as downlink path delay intervals for that antenna to provide the first mapping of antennas to downlink path delay intervals.
and/or
creating the second mapping comprises:
performing a power delay profile estimation for different downlink spatial filters using an antenna to receive a sweep of narrower beam reference signals that have at least the different downlink spatial filters;
for each of the different downlink spatial filters, group peaks delays in the power delay profile for a downlink angle of departure with downlink path delay intervals for that downlink angle of departure to provide the second mapping of downlink path delay intervals to downlink spatial filters, optionally the downlink spatial filters being downlink angles of departure.

13. User equipment as claimed in claim any of claims 10 to 12, wherein the wider beam downlink reference signal is a Synchronization Signal Block (SSB) signal or a Channel State Information Reference Signal (CSI-RS) and the user equipment is configured to inform the network in dependence upon:
better quality being available on the selected antenna compared to the current in-use antenna when using a different angle of departure to the current in-use angle of departure and/or
better quality is available on the selected antenna compared to the current in-use antenna when using a same angle of departure to the current in-use angle of departure.

14. A method comprising:
reporting at least one candidate CSI beam index to a network to avoid and/or
mitigate a maximum permissible exposure (MPE) event at a user equipment; and
at the user equipment, associating at least one candidate antenna of the user equipment to the at least one candidate CSI beam index.

15. A computer program that when run by one or more processors of user equipment causes:
reporting at least one candidate CSI beam index to a network to avoid and/or
mitigate a maximum permissible exposure (MPE) event at the user equipment; and
associating at least one candidate antenna of the user equipment to the at least one candidate CSI beam index.
